# EUROPÄISCHE PATENTSCHRIFT

(11) **EP 3 807 688 B1**
(45) Veröffentlichungstag und Bekanntmachung des Hinweises auf die Patenterteilung: **17.12.2025**
(21) Anmeldenummer: 19728029.0
(22) Anmeldetag: 29.05.2019
(51) Int. Cl.: G02B 7/02, G02B 7/10, G02B 23/16

(54) **STRAHLAUFWEITER UND VERFAHREN ZUM BETREIBEN EINES STRAHLAUFWEITERS**
BEAM EXPANDER AND METHOD FOR OPERATING A BEAM EXPANDER
EXPANSEUR DE FAISCEAU ET PROCÉDÉ POUR FAIRE FONCTIONNER UN EXPANSEUR DE FAISCEAU

(30) Priorität: 18.06.2018 DE 102018005052; 19.12.2018 DE 102018132919
(43) Veröffentlichungstag der Anmeldung: 21.04.2021
(73) Patentinhaber: JENOPTIK Optical Systems GmbH, 07745 Jena (DE)
(72) Erfinder: FRANZ, Stefan, 07751 Jena (DE); SEHER, Bernd, 07743 Jena (DE); SCHEIDING, Gunter, 07751 Jena (DE)
(74) Vertreter: Waldauf, Alexander
(86) Internationale Anmeldenummer: PCT/EP2019/064054
(87) Internationale Veröffentlichungsnummer: WO 2019/243016

(56) Entgegenhaltungen:
- CN-A- 103 398 314
- CN-A- 105 033 451
- CN-A- 108 080 800
- CN-Y- 201 307 183

## Beschreibung

Die vorliegende Erfindung bezieht sich auf einen Strahlaufweiter und ein Verfahren zum Betreiben eines Strahlaufweiters.

Strahlaufweiter, auch "Beam Expander" genannt, vergrößern oder verkleinern einen Durchmesser eines optischen Lichtrahls, beispielsweise Laserstrahls. Dadurch ermöglichen sie, verschiedene Elemente eines optischen Systems aufeinander anzupassen. So kann beispielsweise der Laserstrahldurchmesser am Ausgang des Lasers an einen benötigten Durchmesser am Eingang eines Objektivs angepasst werden. Solche Strahlaufweiter kommen vor allem in der Lasermaterialbearbeitung zum Einsatz.

Eine optimale optische Achse des Linsensystems ist Grundlage für ein gut funktionierendes optisches System. Beim Einbau eines Strahlaufweiters sollte dieser korrekt justiert werden, d. h. idealerweise auf der optischen Achse liegen. Der Anwender sollte darüber hinaus auch wissen, ob die Strahlqualität nach Austritt aus dem Strahlaufweiter noch in Ordnung ist.

Die CN 108 080 800 A offenbart einen Strahlaufweiter mit einem Aufnahmerohr mit einer Lichteintrittsöffnung und einer Lichtaustrittsöffnung. Ferner umfasst der Strahlaufweiter zumindest eine in einem Strahlengang zwischen der Lichteintrittsöffnung und der Lichtaustrittsöffnung des Aufnahmerohres in eine Bewegungsrichtung beweglich angeordnete optische Einheit zum Ändern eines Durchmessers eines über die Lichteintrittsöffnung eingekoppelten Strahlenbündels und einer mit der optischen Einheit gekoppelten Führungseinheit zum Führen der optischen Einheit in dem Aufnahmerohr und einem Antriebselement und einer mit der Führungseinheit mechanisch gekoppelten Linearantriebs-Kopplungseinheit, um eine Bewegung oder Rotation des Antriebselementes in eine Bewegung der Führungseinheit zu koppeln und/oder zu überführen.

Vor diesem Hintergrund schafft die vorliegende Erfindung einen verbesserten Strahlaufweiter sowie ein verbessertes Verfahren zum Betreiben eines Strahlaufweiters gemäß den Hauptansprüchen. Vorteilhafte Ausgestaltungen ergeben sich aus den Unteransprüchen und der nachfolgenden Beschreibung.

Es wird vorliegend ein Strahlaufweiter gemäß Anspruch 1 vorgestellt.

Unter einem Aufnahmerohr kann ein zylindrischer Körper verstanden werden, in dem die optische Einheit beweglich gelagert ist. Unter einer optischen Einheit kann ein (beispielsweise transparentes) Strahlformungselement wie beispielsweise eine Linse oder ein Prisma verstanden werden, welches beispielsweise in einer Halteeinheit oder Gehäuseeinheit aufgenommen und geführt ist. Beispielsweise kann die optische Einheit jedoch auch mehrere Komponenten wie Linsen oder Prismen enthalten. Die optische Einheit ist hierbei in eine Bewegungsrichtung beweglich im Aufnahmerohr gelagert. Unter einer Führungseinheit kann ein Mitnehmer oder ein Zapfen verstanden werden, welcher die optische Einheit mit der Linearantriebs-Kopplungseinheit verbindet, sodass eine Bewegung der Linearantriebs-Kopplungseinheit, die vorzugsweise in die Bewegungsrichtung erfolgt, auf die optische Einheit übertragen wird, sodass die optische Einheit ebenfalls in die Bewegungsrichtung bewegt wird. Unter der Bewegungsrichtung kann hierbei eine eindimensionale Bewegungsmöglichkeit der optischen Elementes, der Führungseinheit oder der Linearantriebs-Kopplungseinheit beispielsweise entlang oder parallel einer Bewegungsachse verstanden werden, wobei diese Bewegung in eine erste Richtung und dann in eine zur ersten Richtung entgegengesetzten zweiten Richtung ermöglicht ist. Die Bewegungsrichtung bezeichnet somit die Bewegungsachse, auf der oder parallel zu der die optische Einheit, die Führungseinheit und/oder die Linearantriebs-Kopplungseinheit beweglich ist.

Der hier vorgestellte Ansatz basiert auf der Erkenntnis, dass ein Strahlaufweiter technisch sehr einfach, kostengünstig und präzise arbeitend hergestellt werden kann, wenn die optische Einheit durch die Wirkung der Linearantriebs-Kopplungseinheit mittels der Führungseinheit in dem Aufnahmerohr auf der Bewegungsrichtung in die Bewegungsrichtung beweglich gelagert ist. Hierbei können breit verfügbare Komponenten mit unktitischen Toleranzanforderungen verwendet werden, welche die Herstellung des hier vorgestellten Strahlaufweiters sehr kostengünstig ermöglicht.

Die Linearantriebs-Kopplungseinheit weist zumindest zwei voneinander beabstandete Muttern auf, die mit einer Gewindestange als Antriebselement gekoppelt oder koppelbar sind und/oder die ausgebildet sind, um bei einer Rotation der Gewindestange als Antriebselement eine Linearbewegung der Führungseinheit zu bewirken. Eine solche Ausführungsform des hier vorgeschlagenen Ansatzes bietet den Vorteil, ein Verkippen der Linearantriebs-Kopplungseinheit bei einer Rotation der Gewindestange als die Linearantriebs-Kopplungseinheit antreibendes oder bewegendes Antriebselement möglichst gering zu halten, da durch die voneinander beanstandeten Muttern eine Abweichung der Bewegungsrichtung der Linearantriebs-Kopplungseinheit von einer Spindelachse minimiert werden kann.

Erfindungsgemäß sind die zumindest zwei Muttern der Linearantriebs-Kopplungseinheit im Wesentlichen drehfest, winkelsteif und/oder gegeneinander unbeweglich verbunden oder fixiert. Eine solche Ausführungsform bietet den Vorteil, dass der von den Muttern in Eingriff genommene Abschnitt der Gewindestange sehr lang und möglichst spielfrei ausgewählt werden kann, wodurch sich ein Spiel der Linearantriebs-Kopplungseinheit entlang der Spindelachse weiter minimieren lässt.

Besonders spielarm lässt sich eine Ausführungsform des hier vorgestellten Ansatzes realisieren, wenn die optische Einheit und die Linearantriebs-Kopplungseinheit und/oder die Führungseinheit im Wesentlichen in die Bewegungsrichtung bewegbar sind. Vorteilhafterweise können dann die optische Einheit und die Linearantriebs-Kopplungseinheit und/oder die Führungseinheit möglichst wenig quer bzw. bewegt werden. Auf diese Weise lässt sich ein Verkippen einer Strahlachse der optischen Einheit aus der Bewegungsrichtung möglichst verhindern oder zumindest minimieren.

Günstig ist ferner eine Ausführungsform des hier vorgestellten Ansatzes, bei der die Führungseinheit derart mit der Linearantriebs-Kopplungseinheit gekoppelt ist, um eine Drehung oder Rotation der Linearantriebs-Kopplungseinheit um das Antriebselement zu verhindern. Beispielsweise kann hierzu die Führungseinheit Eingriff in die Linearantriebs-Kopplungseinheit nehmen oder umgekehrt. Eine solche Ausführungsform des hier vorgeschlagenen Ansatzes bietet den Vorteil, ein Verkippen zwischen der Linearantriebs-Kopplungseinheit und der Führungseinheit zu vermeiden oder zu reduzieren, sodass die Führungseinheit möglichst präzise entlang der Bewegungsrichtung oder der Bewegungsrichtung geführt werden kann, um ein Spiel zwischen diesen beiden Komponten des Strahlaufweiters möglichst zu vermeiden.

Gemäß einer anderen Ausführungsform kann die Führungseinheit zumindest einen sich zumindest teilweise in Bewegungsrichtung der Führungseinheit erstreckenden Hebel sowie eine Feder aufweisen, die zwischen ein Ende des Hebels und die Linearantriebs-Kopplungseinheit gespannt oder spannbar ist. Der Hebel kann dabei beispielsweise im Wesentlichen parallel zur Bewegungsachse des optischen Elementes ausgerichtet sein. Eine solche Ausführungsform des hier vorgestellten Ansatzes bietet den Vorteil, die Führungseinheit in Bezug zur Bewegungsrichtung bzw. zur Bewegungsachse geringfügig zu verkippen, um hierdurch eine Vorspannung der Führungseinheit in Bezug zur optischen Einheit zu schaffen. Auf diese Weise lässt sich ein Spiel der optischen Einheit bei der Bewegung durch das Aufnahmerohr minimieren.

Weiterhin kann gemäß einer speziellen Ausführungsform eine weitere Feder vorgesehen sein, die zwischen einem dem Ende des Hebels gegenüberliegenden weiteren Ende des Hebels und die Linearantriebs-Kopplungseinheit gespannt oder spannbar ist, insbesondere wobei ein Führungszapfen zur Übertragung einer Bewegung der Führungseinheit auf die optische Einheit zwischen dem Ende und dem weiteren Ende in den Hebel eingreift. Eine solche Ausführungsform bietet den Vorteil, dass eine Vorspannung der Führungseinheit auf die optische Einheit in beide von zwei möglichen Bewegungsrichtungen entlang der Bewegungsachse eingebracht werden kann, sodass hierdurch eine Bewegung der optischen Einheit in eine Vorwärtsrichtung als auch in eine Rückwärtsrichtung möglichst spielfrei oder spielarm ausgestaltet werden kann.

Auch kann gemäß einer weiteren Ausführungsform die Feder und/oder die weitere Feder in eine Richtung spannbar oder gespannt sein, die quer zur Bewegungsrichtung, insbesondere senkrecht zur Bewegungsrichtung ausgerichtet ist. Eine solche Ausführungsform bietet den Vorteil, auf kleinem Bauraum die gewünschte Vorspannung für die Führungseinheit bereitstellen zu können, wobei die durch die Feder und/oder die weitere Feder ausgeübte Kraft mit sehr einfachen technischen Mitteln einer Federaufhängung aus einer gewünschten Richtung bereitgestellt werden kann.

Denkbar ist ferner eine Ausführungsform des hier vorgeschlagenen Ansatzes, bei der der Hebel zumindest teilweise eine L-Form aufweist und/oder wobei die Feder und/oder die weitere Feder an einem Bereich des Hebels befestigbar oder befestigt ist, der sich quer, insbesondere senkrecht von der Bewegungsrichtung weg erstreckt. Eine solche Ausführungsform des hier vorgestellten Ansatzes bietet eine weitere Möglichkeit zur technisch einfachen Umsetzung des Einprägens einer Vorspannung auf die Führungseinheit.

Besonders spielfrei lässt sich die optische Einheit in dem Aufnahmerohr entlang der Bewegungsachse in die Bewegungsrichtung bewegen, wenn die optische Einheit zumindest eine Linse und/oder ein Prisma aufweist, die oder das in einem rohrförmigen Linsenträger angeordnet ist. Speziell kann der rohrförmige Linsenträger in Richtung der Bewegungsachse zumindest eine doppelte Länge, insbesondere zumindest eine fünffache Länge, als die Breite der Linse oder des Prismas aufweisen.

Günstig ist weiterhin eine Ausführungsform des hier vorgestellten Ansatzes als Verfahren zum Betreiben eines Strahlaufweiters gemäß einer hier vorgestellten Variante, wobei das Verfahren den folgenden Schritt aufweist:
- Bewegen oder In-Rotation-Versetzen des Antriebselementes, um eine Bewegung des Führungselementes oder der optischen Einheit in Bewegungsrichtung zu bewirken.

Eine solche Ausführungsform bietet den Vorteil einer besonders spielfreien oder spielarmen Bewegung des optischen Elementes im Aufnahmerohr.

Auch kann gemäß einer weiteren Ausführungsform im Schritt des Bewegens eine Umkehrung einer Rotation oder Bewegung des Antriebselementes bewirkt werden, um die optische Einheit in eine gewünschte Position zu bringen. Eine solche Ausführungsform bietet den Vorteil, dass durch die Umkehrung der Rotation oder Bewegung des Antriebselementes eine Wirkung eines Restspielfehlers weiter verkleinert werden kann, wenn die (gewünschte) Position der optischen Einheit möglichst immer von einer (einzigen) Seite aus angefahren wird.

Der hier vorgestellte Ansatz schafft ferner ein nicht unter die beanspruchte Erfindung fallendes Steuergerät, das ausgebildet ist, um den Schritt einer Variante eines hier vorgestellten Verfahrens in einer entsprechenden Einrichtung durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und, wenn das Programmprodukt oder Programm auf einem Computer ausgeführt wird, bewirkt, dass das Steuergerät zur Durchführung, Umsetzung und/oder Ansteuerung des Schrittes bzw. der Schritte des Verfahrens nach einer der vorstehenden Ausführungsformen verwendet wird.

Die Erfindung wird anhand der beigefügten Zeichnungen beispielhaft näher erläutert.

Es zeigen:
- Figur 1: eine schematische Darstellung eines (motorisierten) Strahlaufweiters gemäß einem Ausführungsbeispiel der vorliegenden Erfindung in Schnittdarstellung;
- Figur 2: eine schematische Darstellung eines Ausschnittes des Antriebes zum (motorisierten) Strahlaufweiter gemäß einem Ausführungsbeispiel der vorliegenden Erfindung;
- Figur 3: eine schematische Darstellung eines (motorisierten) Strahlaufweiters gemäß einem Ausführungsbeispiel der vorliegenden Erfindung aus Figur 1 in Draufsicht;
- Figur 4: eine schematische Darstellung eines Ausschnittes des Antriebes und Ankopplung zum (motorisierten) Strahlaufweiter gemäß einem Ausführungsbeispiel der vorliegenden Erfindung in Schnittdarstellung;
- Figur 5: eine schematische Darstellung eines (motorisierten) Strahlaufweiters gemäß einem Ausführungsbeispiel der vorliegenden Erfindung in 3D-Ansicht mit transparentem Gehäuse;
- Figur 6: eine schematische Darstellung eines (motorisierten) Strahlaufweiters gemäß einem Ausführungsbeispiel der vorliegenden Erfindung, bei dem die Koppelstelle ohne Gehäuse detaillierte abgebildet ist;
- Figur 7: eine schematische Darstellung eines (motorisierten) Strahlaufweiters gemäß einem Ausführungsbeispiel der vorliegenden Erfindung, bei dem die Koppelstelle in Schnittdarstellung detailliert dargestellt ist;
- Figur 8: eine schematische Darstellung eines( motorisierten) Strahlaufweiters gemäß einem Ausführungsbeispiel der vorliegenden Erfindung, bei dem ein Endlagenschalter dargestellt ist;
- Figur 9: eine schematische Darstellung eines (motorisierten) Strahlaufweiters gemäß einem Ausführungsbeispiel der vorliegenden Erfindung, in einer 3D-Ansicht mit Interface-Bauteilen und ohne Gehäuse; und
- Figur 10: ein Ablaufdiagramm eines Ausführungsbeispiels der vorliegenden Erfindung als Verfahren zum Betreiben eines Strahlaufweiters.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Um aus unseren manuell betätigten variablen Beamexpandern elektrisch steuerbare Objektive zu machen, die kostengünstig herstellbar sind, sollten vorteilhafterweise wenige, günstige Komponenten verwendet werden. Das Objektiv selbst braucht nicht zwangsläufig neu entwickelt werden.

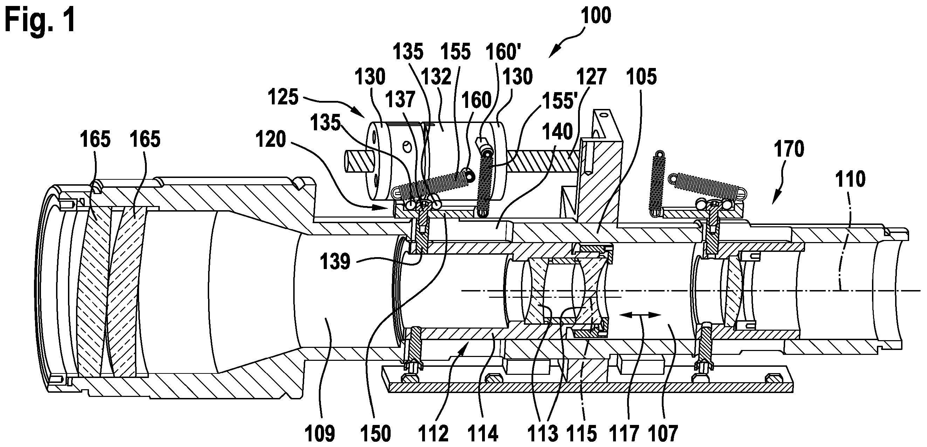

Figur 1 zeigt eine schematische Darstellung eines (motorisierten) Strahlaufweiters 100 gemäß einem Ausführungsbeispiel der vorliegenden Erfindung in Schnittdarstellung. Der Strahlaufweiter 100 umfasst hierbei ein Aufnahmerohr 105 (das auch als Gehäuserohr bezeichnet und beispielsweise als zylindirsches Rohr ausgebildet sein kann) mit einer Lichteintrittsöffnung 107 und einer Lichtaustrittsöffnung 109. Durch die Lichtseintrittsöffnung 107 kann beispielsweise Licht eines Laserstrahls 110 (bzw. eines Strahlenbündels von Laserstrahlen 110) von einer Lasereinheit, die in der Figur 1 aus Gründen der Übersichtlichkeit nicht explizit dargestellt ist, in das Aufnahmerohr 105 einfallen und einer optischen Einheit 112 zugeführt werden, welche beispielsweise als Strahlformer oder Strahlaufweiteeinheit für das Laserlicht 110 wirkt. Die optische Einheit 112 umfasst beispielsweise als optisch wirksames Element eine (oder mehrere) Linse(n) 113, die in einem oder durch einen rohrförmigen Linsenträger 114 der optischen Einheit 112 gehalten werden. Beispielsweise kann die Linse 113, als Zerstreuungslinse ausgebildet sein, wobei in der Figur 1 zwei Linsen 113 dargestellt sind, um den Lasesrstrahl 110 bzw. das Stahlenbündel von Laserstrahlen 110 gemäß einer gewünschten optischen Verzerrung oder Ablenkung zu verformen. Die optische Einheit 112 ist ferner auf einer Bewegungsachse 115 in eine Bewegungsrichtung 117 beweglich angeordnet, wobei die Bewegungsrichtung 117 sowohl eine Vorwärtsbewegung als auch eine Rückwärtsbewegung umfassen kann.

Die optische Einheit 112 ist ferner mittels einer Führungseinheit 120 mit einer Linearantriebs-Kopplungseinheit 125 mechanisch gekoppelt. Wird nun als Teil eines Linearantriebs ein Antriebselement 127 (beispielsweise eine Gewindestange oder eine Motorspindel) von einem in der Figur 1 aus Gründen der Übersichtlichkeit nicht dargestellten Elektromotor in Rotation oder Bewegung versetzt, wird ebenfalls die Linearantriebs-Kopplungseinheit 125 durch einen Eingriff in das Antriebselement 127 in Bewegung versetzt. Hierbei kann vorteilhafterweise das Antriebselement 127 in eine Richtung parallel zur Bewegungsachse 115 ausgerichtet sein, sodass bei einer Rotation des Antriebelementes 127 die Linearantriebs-Kopplungseinheit 125 ebenfalls in die Bewegungsrichtung 117 bewegt wird, jedoch auf einer zur Bewegungsachse 115 parallelen Achse.

Um diese Bewegung des Linearantriebs-Kopplungseinheit 125 bei der Rotation oder Bewegung des Antriebselementes 127 zu bewirken, weist die Linearantriebs-Kopplungseinheit 125 günstigerweise zwei (Spindel-) Muttern 130 auf, die voneinander beabstandet sind und an unterschiedlichen Stellen oder Positionen Eingriff in die Gewindestange als Antriebselement 127 nehmen. Durch die voneinander beabstandete Anordnung der (Spindel-) Muttern 130 kann eine möglichst parallele Bewegung der Linearantriebs-Kopplungseinheit 125 in die Erstreckungsachse des Antriebselementes 127 erreicht werden, sodass ein Spiel bzw. eine Verkippung zwischen dem Antriebselement 127 und der Linearantriebs-Kopplungseinheit 125 bei einer Bewegung der Linearantriebs-Kopplungseinheit 125 möglichst gering gehalten werden kann, wie nachfolgend noch näher erläutert wird. Um diese beabstandete Anordnung bzw. Positionierung der beiden (Spindel-) Muttern 130 zu erreichen, wird ein Zwischenstück 132 verwendet, an dessen gegenüberliegenden Enden jeweils eine der (Spindel-) Muttern 130 befestigt ist. Zugleich kann durch dieses Zwischenstück 132 auch eine Verdrehungssicherung der beiden (Spindel-) Muttern 130 gegeneinander erreicht werden; so kann ebenfalls eine Reduzierung des Spiels zwischen der Linearantriebs-Kopplungseinheit 125 und dem Antriebselement 127 erreicht werden.

Die Linearantriebs-Kopplungseinheit 125 ist nun mittels einer oder mehrerer Kontaktstrebe(n) 135 mechanisch mit der Führungseinheit 120 verbunden, wobei die Konaktstreben 135 Eingriff in das Zwischenstück 132 nehmen, beispielsweise in eine Bohrung in dem Zwischenstück 132. Hierdurch kann eine ebenfalls möchlist spielfreie oder zumindest spielarme Übertragung einer Bewegung der Linearantriebs-Kopplungseinheit 125 auf die Führungseinheit 120 erreicht werden. Speziell ist in der Figur 1 ein Ausführungsbeispiel dargestellt, in der zwei Kontaktstreben 135 vorgesehen sind, zwischen denen ein zylindrische Schraube als Übertragungselement 137 der Führungseinheit 120 geführt wird, die selbst in einem Führungszapfen 139 (als Pin-Fassung oder Schraubenfassung) eingreift, der wiederum in eine Bohrung der optischen Einheit 112 Eingriff nimmt, um bei einer Bewegung der Führungseinheit 120 diese Bewegung auf die optische Einheit 112 zu übertragen. Zudem ist der Führungszapfen 139 durch eine langloch-förmige Öffnung 140 des Aufnahmerohres 105 geführt und kann in die Bewegungsrichtung 117 in dieser Öffnung 140 bewegt werden. Um möglichst wenig Spiel bei der Übertragung der Bewegung von der Führungseinheit 120 auf die optische Einheit 112 zu verursachen, kann der Führungszapfen 139 direkt in eine entsprechende Bohrung der optischen Einheit 112 verschraubt oder anderweitig fixiert sein, sodass eine unmittelbare Übertragung einer Bewegung der Führungseinheit 120 auf die optische Einheit 112 erfolgen kann. Der Führungszapfen 139 ist hierbei günstigerweise im Wesentlichen quer (insbesondere senkrecht) zur Bewegungsrichtung 117 bzw. Bewechungsachse 115 ausgerichtet. Vorteilhafterweise kann auch der Führungszapfen 139 an einem Ende des Linsenträgers 114 in diesen eingreifen, da hierdurch die Wirkung der nachfolgend noch detaillierter beschriebenen gewünschten Verkippung der Führungseinheit 120 einen möglichst großen Effekt hat.

Um eine möglichst spielfreie oder zumindest spielarme Bewegung der optischen Einheit 112 in dem Aufnahmerohr 105 entlang der Bewegungsachse 115 zu erreichen, wird der optischen Einheit 112 eine Vorspannung eingeprägt, die durch eine geringfügige Verkippung der Führungseinheit 120 im Bezug auf eine Achse bzw. einen Abstand zwischen der Linearantriebs-Kopplungseinheit 125 und der optischen Einheit 112 realisiert wird. Hierdurch kann erreicht werden, dass die optische Achse durch die optische Einheit 112 nicht mehr streng parallel zur Bewegungsachse 115 verläuft, sodass ein Rand des Linsenträgers 114 beispielsweise an dem Aufnahmerohr 105 anliegt und bei der Bewegung der optischen Einheit 112 entlang der Bewegungsachse 115 an dem Aufnahmerohr 105 entlanggleitet. Dies führt zu einer Reduktion des Spiels zwischen der optischen Einheit 112 und dem Aufnahmerohr 105.

Die Verkippung der Führungseinheit 120 wird nun durch die Anordnung eines Hebels 150 erreicht, der an der Führungseinheit 120 fixiert ist und an dessen Ende zumindest eine Feder 155 eingehängt ist. Der Hebel 150 ist im Wesentlichen parallel zur Bewegungsachse 115 ausgerichtet (wenn die Feder 155 nicht an dem Ende des Hebels 150 eingehängt ist) und auf einer der optischen Einheit 112 gegenüberliegenden Seite des Aufnahmerohres 105 angeordnet. Der Hebel 150 ist hierbei derart gestaltet, dass das Ende des Hebels 150, an dem die Feder 155 eingreift, in einem Abstand zum Führungszapfen 130 bzw. dem Übertragungselement 137 angeordnet, sodass die Verkippung der Führungseinheit 120 durch die durch die Feder 155 eingebrachte Kraft und eine Hebelwirkung erreicht wird.

Der Hebel 150 weist gemäß dem in der Figur 1 dargestellten Ausführungsbespiel ferner einen L-förmigen Abschnitt auf, sodass das Ende des Hebels 150, an dem die Feder 155 eingehängt ist, nicht auf demjenigen Teil des Hebels 150 liegt, der im Wesentlichen parallen zur Bewegungsachse 115 ausgerichtet ist. Die Feder 155 ist weiterhin zwischen das vorstehen bereits beschriebene Ende des Hebels 150 und einem Fixierungselement 160 gespannt, das unbeweglich an der Linearantriebs-Kopplungseinheit 125 befestig ist, beispielsweise an dem Zwischenkörper 132 angebracht ist.

Zusätzlich kann auch der Hebel 150 an einem weiteren Ende, das dem Ende gegenüberliegt, an dem die Feder 155 Eingriff in den Hebel 150 nimmt, ebenfalls einen Angriffspunkt für eine weitere Feder 155' aufweisen. Diese weitere Feder 155' kann hierbei beispielsweise an einem weiteren Fixierungselement 160' befestigt sein, das an der Linearantriebs-Kopplungseinheit 125 fixiert ist. Beispielsweise kann dann der Führungszapfen 139 zwischen den beiden Enden liegen. Auf diese Weise kann sowohl bei einer Vorwärtsbewegung als auch bei einer Rückwärtsbewegung der Linearantriebs-Kopplungseinheit 125 auf die Führungseinheit 120 bzw. die optische Einheit 112 eine Vorspannung (die beispielsweise bei den Bewegungen in Vorwärtsrichtung und in Rückwärtsrichtung unterschiedlich ist) ausgeübt werden, die sich dann vorteilhaft auf einer Reduktion oder eine Vermeidung eines Spiels zwischen der optischen Einheit 112 und dem Aufnahmerohr 105 auswirkt. Durch eine solche Maßnahme kann beispielsweise ebenfalls erreicht werden, dass eine gewünschte Position der optischen Einheit 112 immer von einer gleichen Seite her angefahren werden kann, sodass sichergestellt ist, dass das Spiel nach einer Verstellung oder Bewegung der optischen Einheit 112 gleich bleibt, unabhängig von einem möglichweise unterschiedlichen Spielraum im Bereich vor der gewünschten Position der optischen Einheit 112 in Bewegungsrichtnug 117 oder im Bereich nach der gewünschten Position der optischen Einheit 112 in Bewegungsrichtung 117.

Die Feder 155 und/oder die weitere Feder 155' kann/können beispielsweise als Schraubenfeder ausgestaltet sein.

Weiterhin kann das Laserlicht 110 bzw. das Strahlenbündel aus Laserlichstrahlen 110 nach dem Passieren der Lichtaustrittsöffnung 109 des Aufnahmerohres 105 eines oder mehrere weitere optische Komponeten 165 wie beispielsweise Linsen durchstrahlen. Auch bevor das Laserlicht 110 oder das Strahlenbündel aus Laserlichstrahlen 110 durch die Lichteintrittsöffnung 107 in das Aufnahmerohr 105 eintritt, kann es ein oder mehrere optische Komponeten 170 durchstahlt haben. In der Figur 1 kann eine solche optische Komponente 170, die das Laserlicht 110 vor dem Eintritt durch die Lichteintrittsöffnung 107 durchstrahlt hat, eine der optischen Einheit 112 samt Führungseinheit 120 ähnliche Einheit sein, wobei eine der Linearantriebs-Kopplungseinheit 125 ähnliche Einheit aus Gründen der Übersichtlichkeit in der Figur 1 nicht näher dargestellt ist.

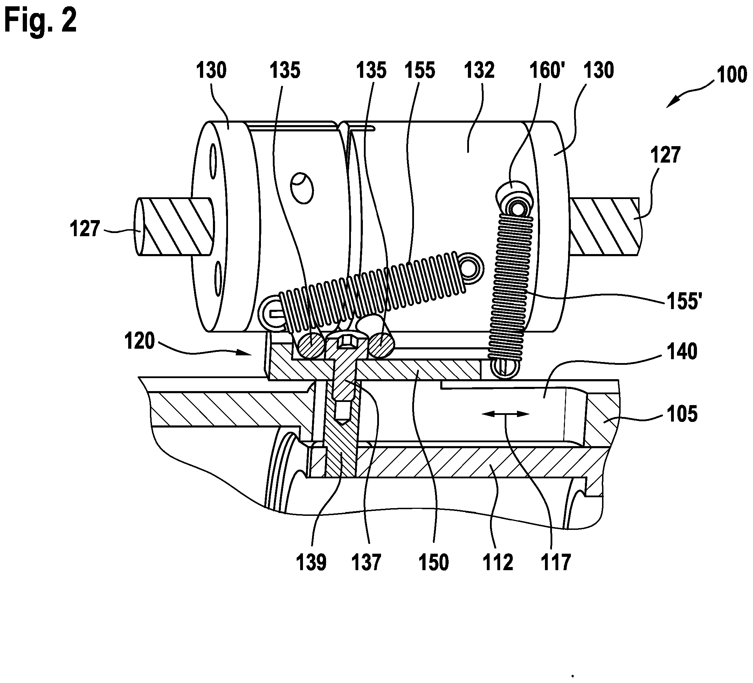

Figur 2 zeigt eine schematische Darstellung eines Ausschnittes des Antriebes zum (motorisierten) Strahlaufweiter 100 gemäß einem Ausführungsbeispiel der vorliegenden Erfindung in eine rvergrößerten Darstellung. Erkennbar aus der Figur 2 ist hierbei wiederum, wie die Kontaktstrebe(n) 135 das Übertragungselement 137 umgreifen, um die Führungseinheit 120 bei einer Bewegung des Antriebselementes 127 in der Öffnung 1410 zu bewegen. Die Federn 155 und 155' sind quer, insbesondere senkrecht zur Bewegungsrichung 117 gespannt, sodass eine Verkippung der Führungseinheit 120 erreicht werden kann, die selbst wieder zu einer Reduktion des Spiels zwischen der optischen Einheit 112 und dem Aufnahmerohr 105 führt.

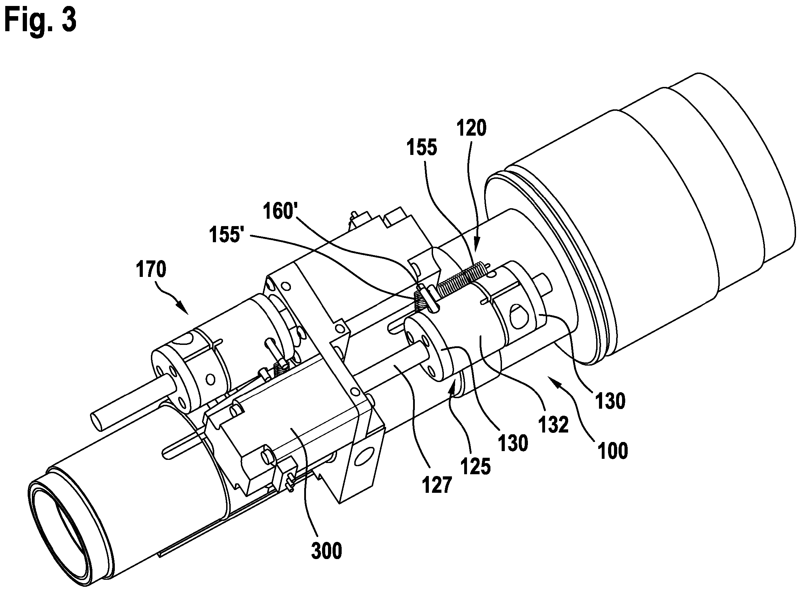

Figur 3 zeigt eine schematische Darstellung eines (motorisierten) Strahlaufweiters 100 gemäß einem Ausführungsbeispiel der vorliegenden Erfindung aus Figur 1 in Draufsicht. Erkennbar sind die Linearantriebs-Kopplungseinheit 125 mit den Muttern 103 sowie ein Teil der Führungseinheit 120, speziell die Federn 155 und 155' sowie die Fixierungselemente 160 und 160'. Auch ist ein Elektromotor 300 erkennbar, der das Antriebselement 127antreiben bzw. in Drehung versetzen kann, um die Linearantriebs-Kopplungseinheit 125 linear zu bewegen. Ebenfalls erkennbar ist eine der Linearantriebs-Kopplungseinheit 125 entsprechende Einheit in der weiteren Komponente 170, die eine weitere optische Einheit bewegen kann, wie sie auf der rechten Seite in der Darstellung aus Figur 1 abgebildet ist.

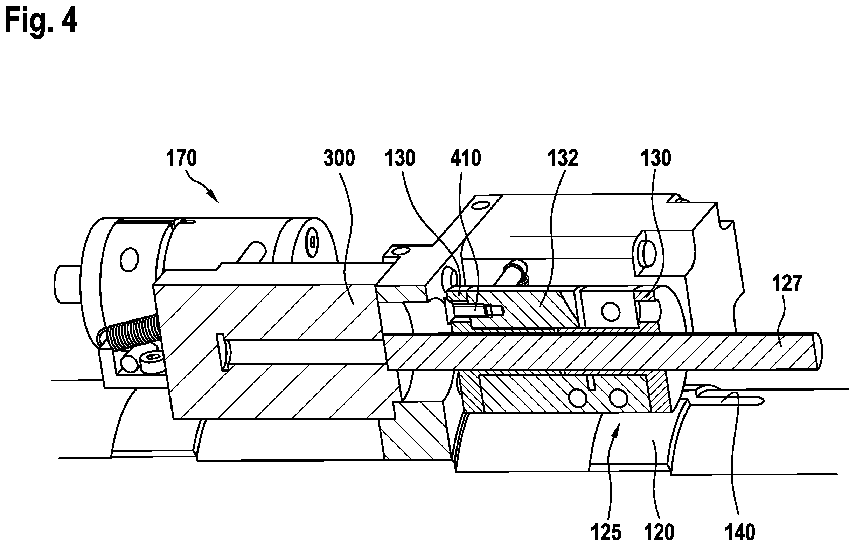

Figur 4 zeigt eine schematische Darstellung eines Ausschnittes des Antriebes und Ankopplung zum (motorisierten) Strahlaufweiter 100 gemäß einem Ausführungsbeispiel der vorliegenden Erfindung in Schnittdarstellung. In der Figur 4 ist beispielsweise ein schematischer Elektromotor 300 dargestellt, der ausgebildet ist, um das Antriebselement 127, hier die Gewindestange, in Drehung oder Rotation zu versetzen, um einer Linearbewegung der Linearantriebs-Kopplungseinheit 125 zu bewirken. Erkennbar ist aus der Schnittdarstellung der Figur 4 ebenfalls, dass die Mutter(n) 130 winkelfest, d.h. verdrehungsfest, miteinander bzw. mit dem Zwischenstück 132 verbunden sind, hier beispielsweise durch eine Schraubverbindung 410 zwischen der Mutter 130 und dem Zwischenstrück 132. Auf diese Weise lässt sich sehr effizient ein Spiel zwischen dem Antriebselement 127 und dem Mutternpaar 130 verhindern oder zumindest reduzieren.

Allgemein lässt sich zu der Klasse von motorisierten Beamexpandern ausführen, dass diese meist in proprietären Konstruktionen ausgeführt werden oder als Aufrüstungen für manuelle verstellbarer Beamexpander. Es werden für diese Zwecke oftmals rotatorische Antriebe verwendet. Die Drehbewegung wird hierbei über Gewinde in eine Linearbewegung gewandelt. Das Gewinde kann auf der Motorwelle sitzen oder auf der Linsenachse. Die präzise und nebenwirkungsarme Kopplung zwischen Motor und z-verstellbarer Linse wird bisher unterschiedlich, oftmals aber nicht zufriedenstellend gelöst. In einer "add-on"-Lösung stellt ein Zahnrad- oder Riemengetriebe die rotatorische Kopplung bei Entkopplung der sonstigen Freiheitsgrade sicher. Da das Gewinde einen großen Außendurchmesser hat, ist ein ausreichend großes Drehmoment zur Verfügung zu stellen, um das Gewinde sicher bewegen zu können. Die Zentrierung der Linsen stellt sich durch die Einhaltung einer Toleranzkette ein. Diese Ausführung ist in Materialkosten und Arbeitsaufwand billig aber die Bewegung ist eher langsam und verschleißbehaftet.

Ein Aspekt der hier zugrundeliegenden Problematik, einen Schrittmotor mit einer spielbehafteten Mutter zur Bewegung der spielbehafteten, in Z-Richtung verstellbaren Objektivteile (also entsprechend der in der Figur 1 dargestellten Bewegungsachse 115 beweglichen Teile) zu verwenden, führt im ersten Versuch zu einem großen Umkehrspiel in der Bewegung (bis zu 0,5 mm) und gelegentlich zu einem makroskopischen Taumel der Strahlachse des Lasertrahls 110 (Beampointing-Fehler).

In einigen möglichen Lösungsansätzen für die vorstehend beschriebene Problematik werden leicht laufende Präzisionsführungen verwendet. Die Motorspindel ist wohldefiniert entkoppelt an den Lineartisch angebunden. Da die Toleranzkette eher lang ist, steht zu vermuten, dass neben den teureren Teilen auch mehr Handarbeit in die Zentriermontage aller Linsen eingegangen ist.

Der Unterschied des hier vorgestellten Ansatzes gegenüber den bekannten Ansätzen kann in unterschiedlichen Aspekten gesehen werden, beispielsweise, dass die Zentrierung der Linsen über die Mechanik-Toleranzen erreicht wird, die Gewindespindel aber separat liegt, sodass eine hohe Geschwindigkeit bei langer Lebensdauer erreicht wird, auf zusätzliche eng tolerierte Teile aber verzichtet werden kann.

Durch mehrere Änderungen des hier vorgestellten Ansatzes gegenüber bekannten Ansätzen wurde eine ausreichend gute Führung erreicht. Diese Änderungen betrafen gemäß einzelnen Ausführungsbeispielen die folgenden Aspekte:
(1) Verwendung von zwei Muttern 130 pro Gewindespindel 127;
(2) Verspannung der Muttern 130 zueinander
(3) statisch bestimmter Kontakt der Mutterngruppe 130 zur Linsengruppe bzw. der optischen Einheit 112
(4) definierte Verspannung der Linsengruppe bzw. der optischen Einheit 112 zu ihrer Führung bzw. der Führungseinheit 120, und/oder
(5) einseitiges Anfahren der Zielposition der optischen Einheit 112 in dem Aufnahmerohr 105.

Mit einem oder mehreren der hier vorgestellten Maßnahmen lässt sich eine Einzelschrittweite von 5 µm an der Linse erzielen, wobei der Materialeinsatz gegebenenfalls nur geringfügig erhöht werden braucht.

Um die vorstehend genannten Aspekte realisieren zu können, kann beispielsweise ein Linearantrieb bereitgestellt werden, der folgende Komponenten umfasst, wobei dieser Linearantrieb bei Bedarf auch zweifach ausgeführt werden kann, wie dies beispielsweise in der Figur 1, 3 oder 4 durch die weitere Komponente 170 bereits angedeutet ist. Ein solcher Linearantrieb kann beispielsweise die folgenden Elemente aufweisen:
(1) einen Schrittmotor beispielsweise entsprechend dem Elektromotor 300 aus der Figur 3 oder 4, (beispielsweise in der Geometrie-Ausführung NEMA 8)
(2) darin integriert eine Gewindespindel als Antriebselement 127 (beispielsweise in der Ausführung TR 5x1)
(3) darauf laufend eine Mutter 130 (beispielsweise in der Ausführung TR 5x1 aus Kunststoff oder alternativ aus Messing, wobei die Kosten einer solche Baugruppe als sehr gering angesetzt werden können)
(4) einen Beamexpander, beispielsweise in der Ausführugn 1x-8x mit in Z-Richtung geführten Linsen (mit einer Führung "Zylinder-in-Zylinder",beispielsweise in der in Figur 1 dargestellten Form der Führung der optischen Einheit in dem Aufnahmerohr)

Die nominale Vollschrittauflösung, die sich damit erreichen läßt, beträgt beispielsweise 5 µm und kann als sehr präzise für einen Strahlaufweiter 100 mit kostengünstigen und breit verfügbaren Bauteilen betrachtet werden.

Jedoch tritt oftmals parasitäres Spiel an den Teilepaarungen Gewindespindel-Mutter und Linsenfassung-Führungsrohr auf. Mit dem hier vorgestellten Ansazt kann eine Linearbewegung erzeugt werden, in der die Vollschrittauflösung nutzbar ist.

Die Anordnung von Komponenten des Strahlaufweiters und das Verfahren zum Betreiben eines solchen Strahlaufweiters ermöglichen die Herstellung der notwendigen Linearachse aus deutlich toleranzbehafteten Komponenten, die jedoch für den vorgesehenen Einsatz sehr gut geeignet sind.

Durch den hier vorgestellten Ansazt werden in der Übertragungskette von der Rotation des Schrittmotors 300 zur Verschiebung der Linse der optischen eihneit 112 drei bewegliche Kontaktstellen vorgesehen: zwischen Mutter 130 und der Gewindespindel 127, zwischen Mutter 130 und dem Stift 139 bzw. Führungseinheit 120 auf der Linsenfassung bzw. dem Linsenträger 114 und zwischen Linsenfassung bzw. dem Linsenträger 114 und dem Gehäuserohr als Aufnahmerohr 105. Jede dieser Kontaktstellen kann auf andere Art und Weise die korrekte Übertragung der Bewegung stören. Die wesentlichen Fehlerwirkungen sind Umkehrspiel, welches an losen Kontaktstellen entsteht und Beampointingvariation, dass durch die Fortpflanzung von Lauffehlern von Motor 300 und Spindel 127 initiiert wird. Wenig Umkehrspiel wird durch harte Kopplung erreicht, wenig Lauffehlerfortpflanzung wird durch weiche Kopplung erreicht. Die sich wiedersprechenden Forderungen benötigen mehrere verschieden Gegenmaßnahmen, um den Einfluss der Störungen zu mindern.

Als eine erste der Gegenmaßnahmen kann gemäß dem hier vorgestellten Ansatz eine Mutternlänge vergrößert und/oder eine Gewindeverspannung vorgesehen werden. Die Spielpaarung zwischen Spindelgewinde 127 und Mutterngewinde 130 erlaubt eine Abweichung der Lage der Mutter 130 entlang der Spindelachse 127 und eine Kippung zwischen den Achsen von Spindel 127 und Mutter 130.

Bei gegebener Passungspaarung zwischen Mutter 130 und Spindel 127 wird die Kippung kleiner, wenn das im Eingriff der Mutter(n) 130 stehende Gewindestück der Gewindespindel 127 länger gewählt wird. Das wird hier erreicht, indem zwei Muttern 130 in Reihe verwendet werden, die winkelsteif, also verdrehsicher (beispielsweise entsprechend der Figur 1 durch das Zwischenstück 132) miteinander verbunden werden. Diese beiden Muttern 130 werden so miteinander verbunden, dass ihr Abstand entlang der Zylinderachse gewählt werden kann. Bei der Montage wird dieser so gewählt, dass das Spiel entlang einer Z-Richtung, als in die Bewegungsrichtung 117, bis auf einen laufnotwendigen Anteil verringert wird.

Die Stützlänge der Mutter(n) 130 wird vergrößert, indem zwei Teilgewinde als die beiden Muttern 130 mit einem wählbaren Abstand (der durch das Zwsichenstück 132 eingestellt werden kann) verwendet werden. Gemäß einem Aspekt des hier vorgestellten Ansatzes können daher zwei verfügbare Muttern 130 verwendet werdne, die in einem gemeinsamen Träger bzw. Zwischestück 312 definiert eingespannt werden können.

Die Kontaktstelle zwischen der Mutter 130 bzw. den Muttern 130 und den Steuerstift bzw. dem Führungszapfen 139 der Führungseinheit 120 (der mit der Linsenfassung verbunden ist) soll möglichst genau entlang der Verschieberichtung (als oder Bewegungsrichtung 117) steif sein, gleichzeitig die Rotation der Mutter 130 verhindern, alle anderen Freiheitsgrade aber offen lassen, sodaß ein Taumeln der Spindel 127 in den Lagern des Motors keine Fehler erster Ordnung hervorrufen kann. Das wird über zwei Einpunktkontakte erreicht, welche mit Federkraft beaufschlagt sind, sodass die Position der Teile in beiden Wirkrichtungen der gesperrten Freiheitsgrade definiert bleibt.

Der Kontakt besteht in Z-Richtung, also in die Bewegungsrichung 117 zwischen einem Zylinderstift als der Kontaktstrebe 135, der zur Mutter 130 bzw. zur Linearantriebs-Kopplungseinheit 125 gehört und einem Zylinderstift bzw. dem Führungszapfen 139 oder einem zylindrischen Schraubenkopf als Übertragungselement 137, der zur Führungseinheit 120 gehört und mit der bewegten Linsenfassung als optischer Einheit 112 mechanische gekoppelt ist. Die Rotation der Mutter 130 wird über denselben Zylinderstift als Übertragungselement 135 in der Mutter 130 gesperrt, der auf der Linsenfassungsgruppe bzw. der optischen Einheit 112 einen zweiten, bevorzugt punktförmig wirkenden Auflagepunkt findet. Dieser liegt senkrecht zu dem ersten Kontaktpunkt.

Die Vorspannung der Kontaktpunkte kann unabhängig voneinander mit zwei senkrecht zueinander stehenden Federn 155 bzw.155' eingestellt werden oder es wird eine einzelne, diagonal wirkende Feder 155 verwendet. In diesem Fall wird über den Einbauwinkel der Feder 155 die Verteilung der Vorspannkräfte vorgenommen.

Es wird somit ein Ansatz vorgestellt, bei dem der Kontakt in Z-Richtung, also in Bewegungsrichtung 117 wird zwischen einem Pin als Kontaktstrebe 135 (rechts) und einem Zylinderschraubenkopf als Übertragungselement 137 hergestellt und mit eine Feder 155 vorgespannt. Der Pin bzw. die Kontaktstrebe 135 links liegt nicht an. (Dieser wird nur in Fehlerfall der Fahrwegsüberschreitung wirksam.)

Wie zuvor beschrieben, wird ferner eine Zylindervorspannung eingestellt. Die Z-verschiebliche Fassung der Linse, d. h., die optische Einheit 112, wird im Gehäuserohr als Aufnahmerohr 105 geführt. Damit das leicht, verschleißarm und präzise erfolgen kann, sollte ein kleines Spiel über die Durchmesser der beteiligten Zylinderflächen eingestellt werden. Dieses (notwendige) Spiel führt bei einseitiger, wechselnder Krafteinleitung zu einem Kippen der Linsenfassung bzw. des Linsenträgers 114. Die Linse kippt und kann sich auch lateral verschieben. Die Linsenmitte liegt dann außerhalb der optischen Achse. Die Richtung des Laserstrahls 110 ändert sich dabei. Dieser Beampointingfehler kann die Anwendung beeinträchtigen.

Das Kippen der Fassung wird kleiner, wenn die Fassung mit einem Moment beaufschlagt wird, sodaß sich der geführte Zylinder als Linsenträger 114 einseitig an den Rohrzylinder 105 anlegt. Dieses Moment wird hier dadurch erzeugt, daß am Pin an der Fassung ein Hebel 150 angebracht wird, welcher mit einer Federkraft einer der Federn 155 bzw. 155' beaufschlagt wird.

Es wird somit ein Ansatz vorgeschlagen, bei dem eine senkrechte Feder 155'ein Moment in die Mutter(n) 130 bringt, die einen rotatorischen Anlagestift als Kontaktstrebe 135 gegen einen Teil des Hebels 150 (siehe unter Kontaktstelle) drückt. Der Krafteinleitungspunkt im Hebel 150 erzeugt gleichzeitig ein Moment, welches den als Führungszylinder der linken Linse ausgebildeten Linsenträger 114 der optischen Einheit 112 reproduzierbar in den Rohrzylinder / das Aufnahmerohr 105 anlegt und damit die Kippung bei Bewegungsrichtungsumkehr reduziert.

Von Vorteil ist weiterhin eine spezielle Ansteuerung zur Verschiebung der optischen Einheit 112. Die oben genannten Maßnahmen führen nämlich dazu, daß das Umkehrspiel in der Übertragungskette minimiert wird. Ein kleines Rest-Umkehrspiel von 5 bis 15 µm kann noch beobachtet werden. Die Wirkung dieses Restfehlers kann jedoch weiter verkleinert werden, wenn die Position der Linse(n) bzw. der optischen Einheit 112 immer von einer Seite aus angefahren wird. Wenn die Linsen "aus der falschen Richtung kommt", sollte sie die Soll-Position überfahren und dann einige Motor-Schritte zurückgezogen werden. Solange das nur einzelne (hier z.B. 3) Motorschritte sind, verlängert sich die Positionierzeit nur unwesentlich.

Die Steuerung bzw. Ansteuerung der Bewegung der optischen Einheit 112 kann mit einer speziellen Ansteuereinrichtung gekoppelt sein. Unter einer Ansteuereinrichtung kann ein elektrisches Gerät verstanden werden, das Sensorsignale verarbeitet und in Abhängigkeit davon Steuer- und/oder Datensignale ausgibt. Die Ansteuereinrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

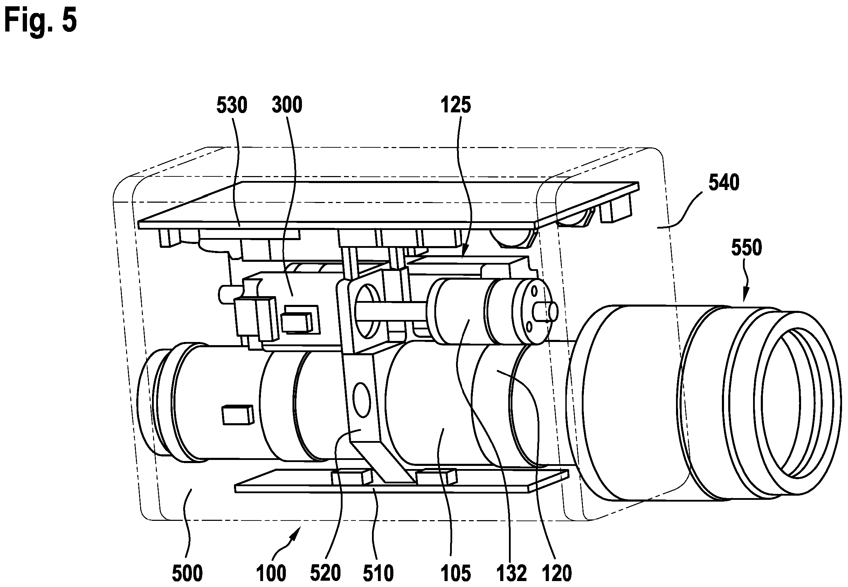

Figur 5 zeigt eine schematische Darstellung eines (motorisierten) Strahlaufweiters 100 gemäß einem Ausführungsbeispiel der vorliegenden Erfindung in 3D-Ansicht mit transparentem Gehäuse 500. Das Gehäuse 500 kann beispielsweise ein Strangpressgehäuse sein. Ebenfalls ist die Führungseinheit 120 erkennbar, die hier nun teilweise als Ring ausgebildet ist, der das Aufnahmerohr 105 umgibt. Um nun eine genaue Position der Führungseinheite 120 erkennen zu können, ist beispielsweise Leiterplatine 510 vorgesehen, die mit Hallsensoren bestückt ist, um bei einer Ausführung der Führungseinheit 120 als Metallring, die Position dieser Führungseinheit 120 in Bezug auf die in der Figur 5 nicht explizit dargestellte Bewegungsachse erkennen zu können. Auch ist in der Figur 5 ein Halter 520 für einen Antrieb (wie beispielsweise den Elektromotor 300) und/oder Sensoren vorgesehen.Der Elektromotor 300 kann beispielsweise durch eine Steuereinheit angesteuert werden, die auf einer Leiterplatte 530 angeordnet ist. Schließlich sind in der Figur 5 noch ein Flansch 540 zur Gehäusebefestigung des Gehäuses 500 an einem anderen Träger und eine Einstelleinheit 550 zur Variation von optischen Komponenten wie beispielsweise Linsen erkennbar, die im optischen Pfad nach der Lichtaustrittsöffnung des Aufnahmerohre 105 angeordnet sind.

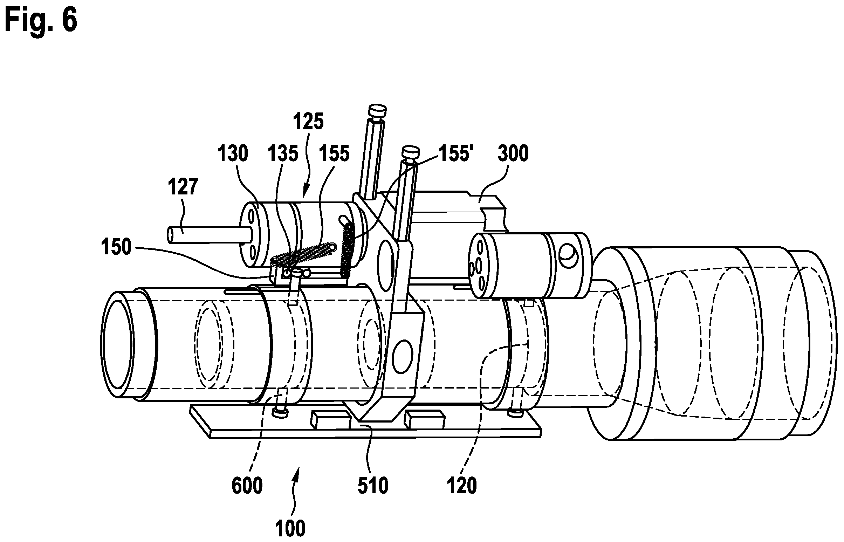

Figur 6 zeigt eine schematische Darstellung eines (motorisierten) Strahlaufweiters 100 gemäß einem Ausführungsbeispiel der vorliegenden Erfindung, bei dem die Koppelstelle ohne das Gehäuse detailliert abgebildet ist. Erkennbar ist hierbei wiederum die Führungseinheit 120, die nun ringförmig ausgebildet ist und an einem unteren Ende einen Gleitstift 600 mit einem Magneten aufweist, der dann beispielsweise über die Hallsensoren der Leiterplatine 510 geführt werden kann, um die genaue Position der Führungseinheit 120 zu erkennen.Auch ist der Hebel 150 zur Kraftübertragung von der/den Mutter(n) 130 auf den Tubus bzw. die optische Einheit zu erkennen, die selbst aus Gründen der Übersichtlichtkeit in der Figur 6 nicht explizit bezeichnet ist. Erkennbar sind auch die Kontaktstreben 135, die als zylindrische Stifte ausgebildet sind und als Mitnehmer bzw. Anschlag dienen.

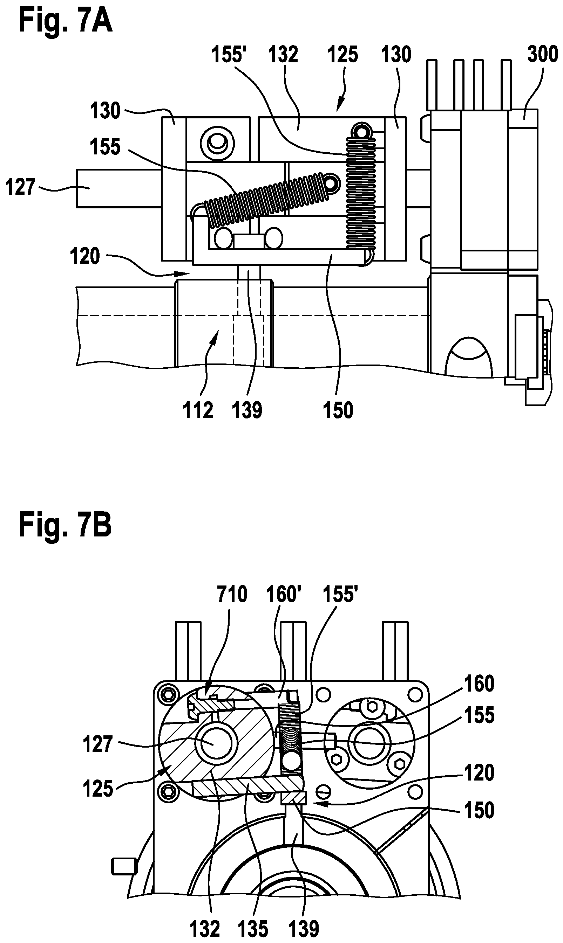

Figur 7 zeigt eine schematische Darstellung eines (motorisierten) Strahlaufweiters 100 gemäß einem Ausführungsbeispiel der vorliegenden Erfindung, bei dem die Koppelstelle in Schnittdarstellung detailliert dargestellt ist. Hierbei ist in der Teilfigur 7A wiederum die Führungseinheit 120 und die Linearantriebs-Kopplungseinheit 125 samt den Federn 155 und 155' erkennbar, die eine Vorspannung auf die Führungseinheit 120 bzw. die optische Einheit 112 ausübt, wobei diese optische Einheit 112 als Tubus mit Schiebelinse ausgestaltet ist und mittels des Stifts 139 der Führungseinheit 120 mitgenommen wird. Auch ist aus der Teilfigur 7A die Linearantriebs-Kopplungseinheit 125 mit den beiden Muttern 130 sowie dem Zwischenstück 132 abgebildet.

In der Teilfigur 7B ist eine Schnittdarstellung durch die Linearantriebs-Kopplungseinheit 125 und einen Teil der Führungseinheit 120 gemäß einem Ausführungsbeispiel der vorliegenden Erfindung dargestellt. Erkennbar ist, dass der Schnitt durch die Linearantriebs-Kopplungseinheit 125 im Bereich des Zwischenstücks 132 erfolgt ist, wobei weiterhin dargestellt ist, dass die Kontaktstrebe 135 durch eine Bohrung durch das Zwischenstück 132 geführt ist. Die Kontatkstrebe 135 kann auch in einem Winkel (von beispielsweise 3°) gegenüber der Waagrechten zwischen einem Abstand von der Gewindestange 127 und dem Hebel 150 ausgerichtet sein, was eine Verklemmung zwischen der Kontaktstrebe 135 und dem Hebel 150 entgegenwirkt. Auch kann das Zwischenstück 132 durch eine Klemmung der losefrei angestellten Mutter 130 gehalten werden, die ans Schraubverbindung 710 ausgestaltet ist, sodass zwischen den Muttern 130 kein Kontakt zur Gewindestange als Antriebselement 127 bestehen braucht, da die Muttern 130 über diese Schraubverbindung 710 als Klemmung zusammengehalten werden.

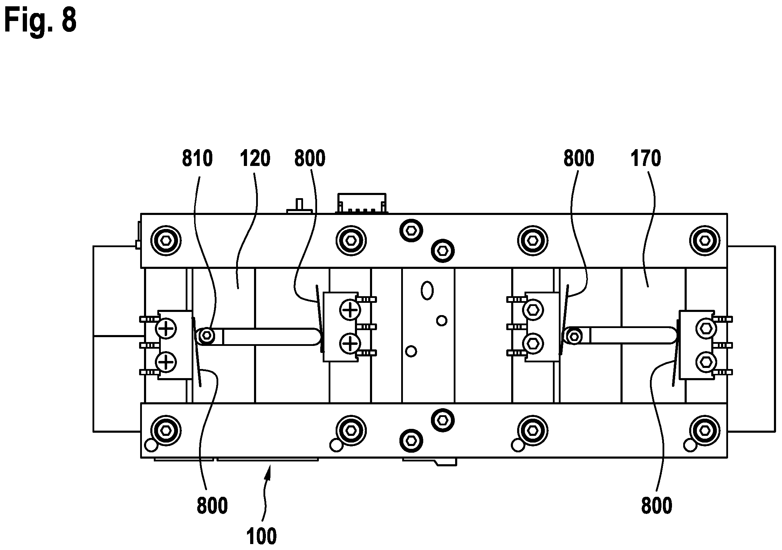

Figur 8 zeigt eine schematische Darstellung eines (motorisierten) Strahlaufweiters 100 gemäß einem Ausführungsbeispiel der vorliegenden Erfindung, bei dem in einer Unteransicht ein Endlagenschalter 800 erkennbar ist, der sich beispielsweise auf der Leiterplatine 510 befindet. Hierbei ist ein Schaltstift an einem unteren Ende der ringförmig ausgebildeten Führungseinheit 120 angeordnet, der bei einem Erreichen der maximal ausgelenkten Position, also einer Position, bei der keine weitere Bewegung des Führungseinheit 120 in eine bestimmte Bewegungsrichtung mehr möglich ist, einen entsprechenden Kontakt mechanisch schließt und somit ein entsprechendes Endlagensignal ausgibt, um zu signalisieren, dass die Führungseinheit 120 nur noch ein eine andere Bewegungsrichtung bewegt werden kann.

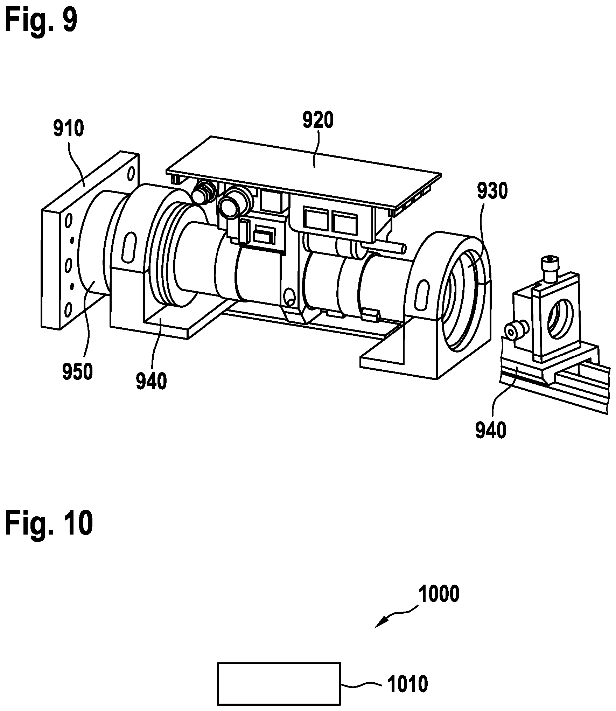

Figur 9 zeigt eine schematische Darstellung eines (motorisierten) Strahlaufweite 100 gemäß einem Ausführungsbeispiel der vorliegenden Erfindung, in einer 3D-Ansicht mit Interface-Bauteilen und ohne Gehäuse. Dargestellt ist ein Frontflansch 910 mit Bohrbild nach Kundenwunsch am SM2-Gewinde sowie ein LP-BEX-M mit ANYBUS - Schnittstelle 920 sowie ein Adapterring 930 M30x1 / Ø55 zur Aufnahme mit MICOS-Halter. Auch sind beispielhafte MICOS-Halter 940 mit Klemmdurchmesser Ø55 zur Fixierung auf OWIS- oder MICOS-Schienensystem sowie ein Zylinder 950 mit einem Durchmesser Ø55 für Radialklemmung dargestellt bei dem eine Ausrichtung um Li3 möglich ist.

Figur 10 zeigt ein Ablaufdiagramm eines Ausführungsbeispiels der vorliegenden Erfindung als Verfahren 1000 zum Betreiben eines Strahlaufweiters gemäß einer hier vorgestellten Variante, wobei das Verfahren 1000 den Schritt 1010 des Bewegens oder In-Rotation-Versetzen des Antriebselementes aufweist, um eine Bewegung des Führungselementes oder der optischen Einheit in Bewegungsrichtung zu bewirken.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Strahlaufweiter (100) mit folgenden Merkmalen:
- einem Aufnahmerohr (105) mit einer Lichteintrittsöffnung (107) und einer Lichtaustrittsöffnung (109);
- zumindest einer in einem Strahlengang zwischen der Lichteintrittsöffnung (107) und der Lichtaustrittsöffnung (109) des Aufnahmerohres (105) in eine Bewegungsrichtung (117) beweglich angeordneten optischen Einheit (112) zum Ändern eines Durchmessers eines über die Lichteintrittsöffnung (107) eingekoppelten Strahlenbündels (110);
- einer mit der optischen Einheit (112) gekoppelten Führungseinheit (120) zum Führen der optischen Einheit (112) in dem Aufnahmerohr (105);
- einem Antriebselement (127) und einer mit der Führungseinheit (120) mechanisch gekoppelten Linearantriebs-Kopplungseinheit (125), um eine Rotation des Antriebselementes (127) in eine Bewegung der Führungseinheit (120) zu koppeln und/oder zu überführen,
**dadurch gekennzeichnet,**
- **dass** der Strahlaufweiter (100) eine Gewindestange (127) als das Antriebselement (127) aufweist;
- **dass** die Linearantriebs-Kopplungseinheit (125) zumindest zwei voneinander beabstandete Muttern (130) und ein Zwischenstück (132) aufweist, wobei jeweils eine der Muttern an den gegenüberliegenden Enden des Zwischenstücks (132) so befestigt ist, dass die zumindest zwei Muttern (130) der Linearantriebs-Kopplungseinheit (125) im Wesentlichen drehfest, winkelsteif und/oder gegeneinander unbeweglich verbunden oder fixiert sind, und
- **dass** die Muttern mit der Gewindestange (127) gekoppelt oder koppelbar sind und/oder die Muttern ausgebildet sind, um bei einer Rotation der Gewindestange (127) eine Linearbewegung der Führungseinheit (120) zu bewirken.

2. Strahlaufweiter (100) gemäß Anspruch 1, wobei die optische Einheit und die Linearantriebs-Kopplungseinheit und/oder die Führungseinheit im Wesentlichen in die Bewegungsrichtung bewegbar sind.

3. Strahlaufweiter (100) gemäß einem der vorangegangenen Ansprüche, wobei die Führungseinheit (120) derart mit der Linearantriebs-Kopplungseinheit (125) gekoppelt ist, um eine Drehung oder Rotation der Linearantriebs-Kopplungseinheit um das Antriebselement (127) zu verhindern.

4. Strahlaufweiter (100) gemäß einem der vorangegangenen Ansprüche, wobei die Führungseinheit (120) zumindest einen sich zumindest teilweise in Bewegungsrichtung (117) der Führungseinheit (120) erstreckenden Hebel (150) sowie eine Feder (155) aufweist, die zwischen ein Ende des Hebels (150) und die Linearantriebs-Kopplungseinheit (125) gespannt oder spannbar ist.

5. Strahlaufweiter (100) gemäß Anspruch 4, umfassend eine weitere Feder (155'), die zwischen einem dem Ende des Hebels (150) gegenüberliegenden weiteren Ende des Hebels (150) und die Linearantriebs-Kopplungseinheit (125) gespannt oder spannbar ist, insbesondere wobei ein Führungszapfen (139) zur Übertragung einer Bewegung der Führungseinheit (120) auf die optische Einheit (112) zwischen dem Ende und dem weiteren Ende in den Hebel (150) eingreift.

6. Strahlaufweiter (100) gemäß einem der Ansprüche 4 oder 5, wobei die Feder und/oder die weitere Feder in eine Richtung spannbar oder gespannt ist, die quer zur Bewegungsrichtung, insbesondere senkrecht zur Bewegungsrichtung ausgerichtet ist.

7. Strahlaufweiter (100) gemäß einem der Ansprüche 4 bis 6, wobei der Hebel (150) zumidenst teilweise eine L-Form aufweist und/oder wobei die Feder (155) und/oder die weitere Feder (155') an einem Bereich des Hebels (150) befestigbar oder befestigt ist, der sich quer, insbesondere senkrecht von der Bewegungsrichtung weg erstreckt.

8. Strahlaufweiter (100) gemäß einem der vorangegangenen Ansprüche, wobei die optische Einheit (112) zumindest eine Linse (113) aufweist, die in einem rohrförmigen Linsenträger (114) angeordnet ist.

9. Verfahren (1000) zum Betreiben eines Strahlaufweiters (100) gemäß einem der vorangegangenen Ansprüche 1 bis 8, wobei das Verfahren (1000) den folgenden Schritt aufweist:
- Bewegen (1010) oder In-Rotation-Versetzen des Antriebselementes, um eine Bewegung des Führungselementes oder der optischen Einheit in Bewegungsrichtung zu bewirken.

10. Verfahren (1000) gemäß Anspruch 9, wobei im Schritt (1010) des Bewegens eine Umkehrung einer Rotation oder Bewegung des Antriebselementes (127) bewirkt wird, um die optische Einheit (112) in eine gewünschte Position zu bringen.

11. Computerprogramm, das dazu eingerichtet ist, wenn das Programm auf einem Computer ausgeführt wird, zu bewirken, dass ein Steuergerät den Schritt des Verfahrens gemäß einem der Ansprüche 9 oder 10 ausführt und/oder ansteuert.

12. Maschinenlesbares Speichermedium, auf dem das Computerprogramm nach Anspruch 11 gespeichert ist.

## Claims

1. Beam expander (100) comprising the following features:
- a receiving tube (105) which has a light entry opening (107) and a light emergence opening (109);
- at least one optical unit (112), which is arranged movably in a movement direction (117) in a beam path between the light entry opening (107) and the light emergence opening (109) of the receiving tube (105) and is intended for changing a diameter of a bundle of rays (110) in-coupled via the light entry opening (107);
- a guide unit (120), which is coupled to the optical unit (112) and is intended for guiding the optical unit (112) in the receiving tube (105);
- a drive element (127) and a linear-drive coupling unit (125) which is mechanically coupled to the guide unit (120), in order to transfer a rotation of the drive element (127) into a movement of the guide unit (120) and/or couple the rotation to the movement,
**characterized**
- **in that** the beam expander (100) comprises a threaded rod (127) as the drive element (127);
- **in that** the linear-drive coupling unit (125) has at least two spaced-apart nuts (130) and an intermediate piece (132), the nuts being fastened to opposite ends of the intermediate piece (132) such that the at least two nuts (130) of the linear-drive coupling unit (125) are connected or fixed substantially for conjoint rotation, in angularly stiff fashion and/or such that they cannot be moved in relation to one another, and
- **in that** the nuts are coupled or can be coupled to the threaded rod (127) and/or the nuts are designed to bring about a linear movement of the guide unit (120) when the threaded rod (127) rotates.

2. Beam expander (100) according to Claim 1, wherein the optical unit and the linear-drive coupling unit and/or the guide unit are movable substantially in the direction of movement.

3. Beam expander (100) according to either of the preceding claims, wherein the guide unit (120) is coupled to the linear-drive coupling unit (125) in such a way that the linear-drive coupling unit is prevented from turning or rotating around the drive element (127).

4. Beam expander (100) according to one of the preceding claims, wherein the guide unit (120) has at least one lever (150), which extends at least partially in the direction of movement (117) of the guide unit (120), and a spring (155) which is biased or can be biased between an end of the lever (150) and the linear-drive coupling unit (125).

5. Beam expander (100) according to Claim 4, comprising a further spring (155') which is biased or can be biased between a further end of the lever (150), opposite to the end of the lever (150), and the linear-drive coupling unit (125), in particular wherein a guide pin (139) for transferring a movement of the guide unit (120) to the optical unit (112) engages in the lever (150) between the end and the further end.

6. Beam expander (100) according to either of Claims 4 and 5, wherein the spring and/or the further spring is biased or can be biased in a direction aligned transversely to the direction of movement, in particular perpendicularly in relation to the direction of movement.

7. Beam expander (100) according to one of Claims 4 to 6, wherein the lever (150) at least partially has an L shape and/or wherein the spring (155) and/or the further spring (155') is fastened or can be fastened to a region of the lever (150) that extends transversely, in particular perpendicularly, away from the direction of movement.

8. Beam expander (100) according to one of the preceding claims, wherein the optical unit (112) has at least one lens (113) arranged in a tubular lens carrier (114).

9. Method (1000) for operating a beam expander (100) according to one of the preceding Claims 1 to 8, wherein the method (1000) comprises the following step:
- moving (1010) the drive element or setting it in rotation, in order to bring about a movement of the guide element or of the optical unit in the direction of movement.

10. Method (1000) according to Claim 9, wherein the step (1010) of moving involves reversing a rotation or movement of the drive element (127), in order to bring the optical unit (112) into a desired position.

11. Computer program set up to bring about the effect that a control unit carries out and/or triggers the step of the method according to either of Claims 9 and 10 when the program is executed on a computer.

12. Machine-readable storage medium on which the computer program according to Claim 11 is stored.

## Revendications

1. Expanseur de faisceau (100) présentant les caractéristiques suivantes :
- un tube de logement (105) doté d'une ouverture d'entrée (107) de lumière et d'une ouverture de sortie (109) de lumière ;
- au moins une unité optique (112) montée mobile dans un trajet optique entre l'ouverture d'entrée (107) de lumière et l'ouverture de sortie (109) de lumière du tube de logement (105) dans un sens de mouvement (117) pour modifier un diamètre d'un faisceau lumineux (110) injecté par l'ouverture d'entrée (107) de lumière ;
- une unité de guidage (120) couplée à l'unité optique (112) pour guider l'unité optique (112) dans le tube de logement (105) ;
- un élément d'entraînement (127) et une unité de couplage à entraînement linéaire (125) couplée mécaniquement à l'unité de guidage (120), afin de coupler et/ou de transformer une rotation de l'élément d'entraînement (127) en un mouvement de l'unité de guidage (120),
**caractérisé**
- **en ce que** l'expanseur de faisceau (100) comporte une tige filetée (127) en tant qu'élément d'entraînement (127) ;
- **en ce que** l'unité de couplage à entraînement linéaire (125) comporte au moins deux écrous (130) espacés l'un de l'autre et une pièce intermédiaire (132), l'un des écrous étant respectivement fixé aux extrémités opposées de la pièce intermédiaire (132) de telle sorte que lesdits au moins deux écrous (130) de l'unité de couplage à entraînement linéaire (125) sont reliés ou fixés de manière sensiblement solidaire en rotation, angulairement rigide et/ou immobile l'un par rapport à l'autre, et
- **en ce que** les écrous sont couplés ou aptes à être couplés à la tige filetée (127) et/ou les écrous sont configurés pour provoquer un mouvement linéaire de l'unité de guidage (120) lors d'une rotation de la tige filetée (127).

2. Expanseur de faisceau (100) selon la revendication 1, dans lequel l'unité optique et l'unité de couplage à entraînement linéaire et/ou l'unité de guidage sont principalement mobiles dans le sens de mouvement.

3. Expanseur de faisceau (100) selon l'une des revendications précédentes, dans lequel l'unité de guidage (120) est couplée à l'unité de couplage à entraînement linéaire (125) de manière à empêcher une rotation de l'unité de couplage à entraînement linéaire autour de l'élément d'entraînement (127).

4. Expanseur de faisceau (100) selon l'une des revendications précédentes, dans lequel l'unité de guidage (120) comporte au moins un levier (150) s'étendant au moins partiellement dans le sens de mouvement (117) de l'unité de guidage (120), ainsi qu'un ressort (155) qui est tendu ou apte à être tendu entre une extrémité du levier (150) et l'unité de couplage à entraînement linéaire (125).

5. Expanseur de faisceau (100) selon la revendication 4, comprenant un autre ressort (155') qui est tendu ou apte à être tendu entre une autre extrémité du levier (150) opposée à l'extrémité du levier (150) et l'unité de couplage à entraînement linéaire (125), en particulier dans lequel un tourillon de guidage (139) destiné à transmettre un mouvement de l'unité de guidage (120) à l'unité optique (112) s'engage dans le levier (150) entre l'extrémité et l'autre extrémité.

6. Expanseur de faisceau (100) selon l'une des revendications 4 ou 5, dans lequel le ressort et/ou l'autre ressort est apte à être tendu ou est tendu dans une direction qui est transversale au sens de mouvement, en particulier perpendiculaire au sens de mouvement.

7. Expanseur de faisceau (100) selon l'une des revendications 4 à 6, dans lequel le levier (150) présente au moins partiellement une forme en L et/ou dans lequel le ressort (155) et/ou l'autre ressort (155') est apte à être fixé ou est fixé à une zone du levier (150) qui s'étend transversalement, en particulier perpendiculairement, en s'éloignant du sens de mouvement.

8. Expanseur de faisceau (100) selon l'une des revendications précédentes, dans lequel l'unité optique (112) comporte au moins une lentille (113) qui est disposée dans un support de lentille (114) tubulaire.

9. Procédé (1000) de fonctionnement d'un expanseur de faisceau (100) selon l'une des revendications 1 à 8, le procédé (1000) comprenant l'étape suivante :
- déplacement (1010) ou mise en rotation de l'élément d'entraînement pour provoquer un mouvement de l'élément de guidage ou de l'unité optique dans le sens de mouvement.

10. Procédé (1000) selon la revendication 9, dans lequel, lors de l'étape (1010) de déplacement, un changement de sens d'une rotation ou d'un mouvement de l'élément d'entraînement (127) est provoqué pour amener l'unité optique (112) dans une position souhaitée.

11. Programme informatique qui est conçu, lorsqu'il est exécuté sur un ordinateur, pour amener un appareil de commande à exécuter et/ou commander l'étape du procédé selon l'une des revendications 9 ou 10.

12. Support de stockage lisible par machine sur lequel le programme informatique selon la revendication 11 est mémorisé.
